# EUROPÄISCHE PATENTSCHRIFT

(11) **EP 0 355 282 B1**
(45) Veröffentlichungstag und Bekanntmachung des Hinweises auf die Patenterteilung: **12.01.1994**
(21) Anmeldenummer: 89110130.5
(22) Anmeldetag: 05.06.1989
(51) Int. Cl.: G11B 33/02, H05K 5/03

(54) **Cassetten-Magnetbandgerät zur Bild-Ton-Aufzeichnung und -Wiedergabe**
Magnetic cassette player for recording and reproducing pictures and sound
Magnétoscope à cassettes pour l'enregistrement et la reproduction d'images et de son

(30) Priorität: 23.08.1988 DE 3828500
(43) Veröffentlichungstag der Anmeldung: 28.02.1990
(73) Patentinhaber: GRUNDIG E.M.V. Elektro-Mechanische Versuchsanstalt Max Grundig holländ. Stiftung & Co. KG., D-90762 Fürth (DE)
(72) Erfinder: Slama, Klaus D. GRUNDIG E.M.V. Max Grundig, D-8510 Fürth/Bay. (DE)

(56) Entgegenhaltungen:
- WO-A-82/03512
- DE-A- 3 743 648
- DE-U- 8 523 652

## Beschreibung

Die Erfindung betrifft ein Cassetten-Magnetbandgerät zur Bild-Ton-Aufzeichnung und -Wiedergabe mit einem Gehäuse in rechteckiger, flacher Bauform, wobei die Bedienungs- und Anzeigeelemente an der schmalen Frontseite des Gehäuses angeordnet sind und im wesentlichen aus einem Cassetten-Einschubfach, aus mehreren Bedientasten, aus einem verschiedene Betriebszustände anzeigenden Display, aus Abstimmtasten einer Netztaste und bedarfsweise aus einem Empfangsteil für einen Geräte-Fernbedienungsgeber bestehen.

Es sind magnetische Aufzeichnungs- und Wiedergabegeräte, z.B. in Form eines Diktiergerätes bekannt, die eine Bedienungsfrontseite aufweisen, die mittels einer aus dem Geräteboden herauszuziehenden ebenen Klappe abzudecken ist. Aus der WO-A-8203512 ist ein Phonogerät bekannt, wobei sich hinter einer von Hand zu betätigenden Klappe die weniger benutzten Bedienungselementen befinden. Eine derartige Ausführung ist auch bei Videorecordern möglich, doch entspricht eine solche einfache, von Hand zu betätigende Klappe nicht den Erfordernissen eines wünschenwerten modernen Gerätekomforts.

Des weiteren ist aus DE-A1-37 43 648 eine Schiebeklappenvorrichtung für elektrische Geräte bekannt. Bei dieser Vorrichtung kann eine Tür oder Schiebeklappe des betreffenden Geräts, beispielsweise eines Videorecorders oder eines Fernsehgerätes, die eine vorderseitige öffnung in der Frontplatte eines elektronischen Gerätes verschließt, durch Drücken einer Sperr-/Entsperrtaste geöffnet werden. An der Innenseite der Schiebeklappe ist eine Zahnstange angeformt, mit der ein Ritzel kämmt. An diesem angeformt befinden sich zwei Übertragungszahnräder, mit denen widerum zwei Antriebszahnräder in Eingriff stehen, um deren Achse eine Spiralfeder herumgewickelt ist. An einem Ende der Schiebeklappe ist eine Fangnase angebracht, welche mit einem Verschlußstück arretiert werden kann. Ein auf das Verschlußstück einwirkender Sperr-/Entsperrhebel kann über eine Sperr-/Entsperrtaste beim Drücken derselben so bewegt werden, daß die Fangnase freigegeben, die Schiebeklappe durch die Kraft der Spiralfeder zurückgezogen und die vorderseitige öffnung in der Frontplatte des Gerätes offen zugänglich gemacht wird. Durch die Charakteristik der vorgespannten Spiralfeder bewegt sich die Schiebeklappe nach Freigabe der Fangnase zunächst schnell und dann langsam, was ein angenehmes, gedämpftes öffnen der Schiebeklappe bewirkt. Geschlossen wird die Schiebeklappe wieder von Hand, wobei die Spiralfeder wieder vorgespannt wird.

Nachteilig bei einer diesbezüglichen Art von Schiebeklappenvorrichtung ist einerseits der relativ große Aufwand zur Erreichung des gewünschten Ziels und andererseits die fehlende Möglichkeit, das öffnen und Schließen der Schiebeklappe wahlweise von Hand oder automatisch durchführen zu können.

Aufgabe der Erfindung ist es daher, eine Abdeckklappe zum bedarfsweisen Abdecken der Bedienungs-Frontseite mit Bedienungselementen und Cassetten-Einschuböffnung eines Videorecorders so zu gestalten, daß sie möglichst ohne großen Aufwand erstellt werden kann und, daß sie zur Freigabe der Bedienungselemente wahlweise elektrisch betrieben oder von Hand zu öffnen bzw. zu schließen ist.

Diese Aufgabe wird durch die kennzeichnenden Merkmale im Anspruch 1 gelöst.

Die Unteransprüche zeigen vorteilhafte Ausgestaltungen der Erfindung.

Die Erfindung wird nachfolgend anhand der Zeichnungen erläutert.
- Figur 1: ist eine perspektivisch gezeichnete Darstellung eines Videorecorders, wobei die schmale Geräte-Frontseite bei geöffneter Abdeckklappe sichtbar ist.
- Figur 2: ist eine Darstellung ähnlich der Figur 1, jedoch bei geschlossener Abdeckklappe.
- Figur 3: ist eine Teilansicht der Figur 1 im Schnitt A-A durch die Frontseite des Gerätes.

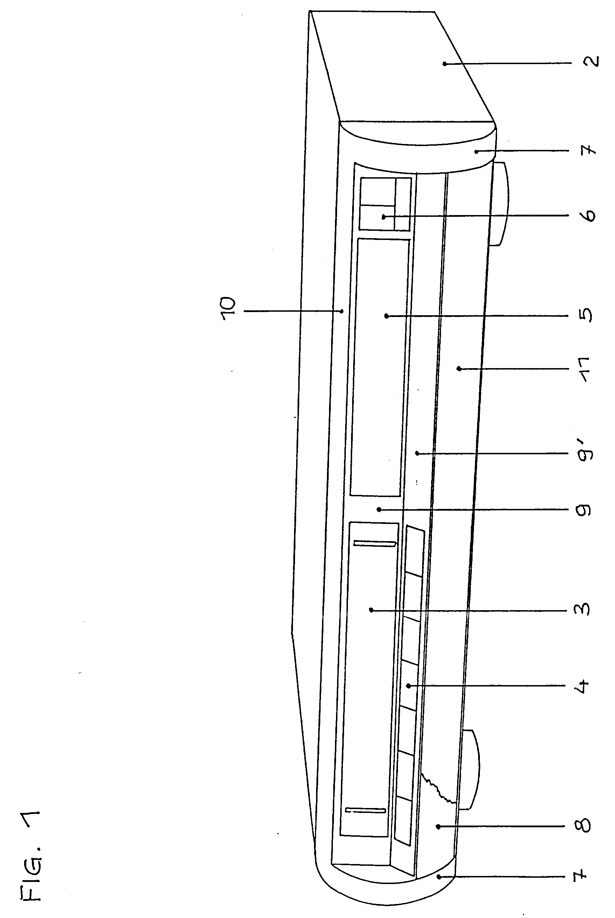

Die Figur 1 zeigt einen Videorecorder 1 in seiner Frontansicht, wobei das Gehäuse 2 eine rechteckige flache Bauform aufweist. Die Bedienungs- und Anzeigeelemente sind an der schmalen Frontseite des Gehäuses angeordnet und bestehen im wesentlichen aus einem Cassetten-Einschubfach 3, aus mehreren Bedientasten 4, aus einem verschiedene Betriebszustände anzeigenden Display 5, sowie aus Abstimmtasten 6, einer Netztaste und einem Empfangsteil für einen Geräte-Fernbedienungsgeber. Die Frontseite des Gehäuses ist im wesentlichen geprägt durch die Stirnflächen 7 beider Gehäuseseitenteile und eine nur im unteren Bereich der Frontseite über die ganze Breite des Gehäuses sich erstreckende streifenförmige Abdeckung 8. Die Stirnfläche beider Gehäuseseitenteile und die streifenförmige Abdeckung sind kreisbogenförmig nach außen gewölbt. Die Bedien- und Anzeigeelemente sind auf einer zurückgesetzten Gehäusewand 9 angeordnet, wobei die Bedientasten 4 auf einer eigenen pultartig geneigten, über die Gerätebreite reichende, schmale Leiste 9′ angeordnet sind. Das Cassetteneinschubfach 3, das Display 5 und die Abstimmtasten 6 sowie Netztaste sind auf der zurückgesetzten, nahezu senkrechtstehenden Gehäusewand 9 angeordnet, an die sich die pultartig geneigte schmale Leiste 9′ mit den Bedientasten 4 anschließt. Die Frontseite des Gehäuses mit den Stirnflächen 7 der Seitenteile, mit der zurückgesetzten Gehäusewand 9 und der sich anschließenden schmalen Leiste 9′ sowie der im unteren Frontseitenbereich des Gehäuses verlaufende Abdeckung 8 und ein gegenüberliegender oberer Verbindungssteg 10 kann aus einem einstückig gefertigten Kunststoffteil bestehen und frontseitig auf den übrigen Gehäusemantel aufgesetzt werden. In der dargestellten Figur befindet sich über der streifenförmigen Abdeckung 8 der Gehäusefrontseite eine nicht näher erkennbare Abdeckklappe 11. Die Abdeckklappe 11 ist dadurch in der Zeichnung kaum erkennbar, da sie nahezu die gleiche äußere Kontur wie die Abdeckung 8 aufweist.

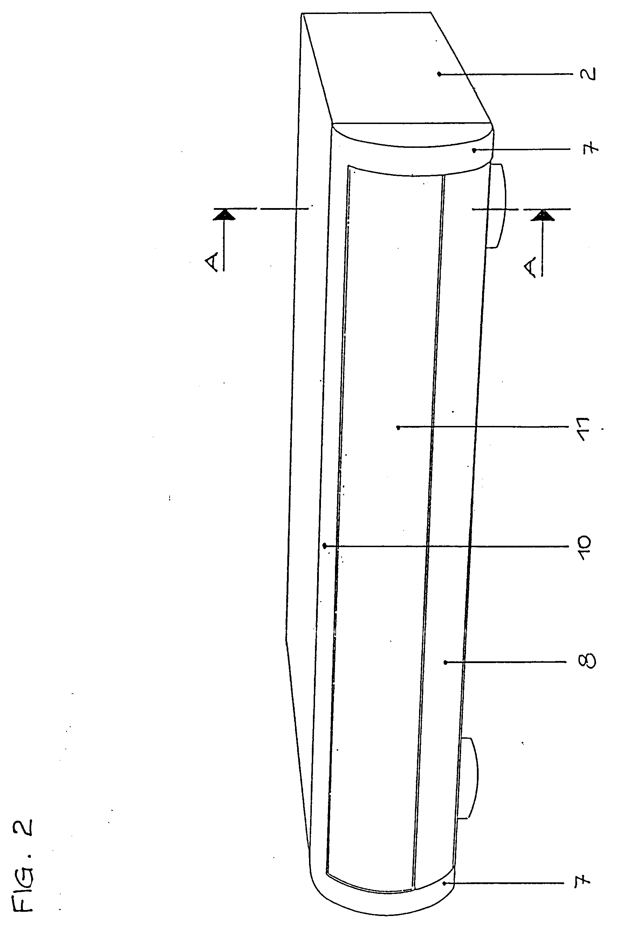

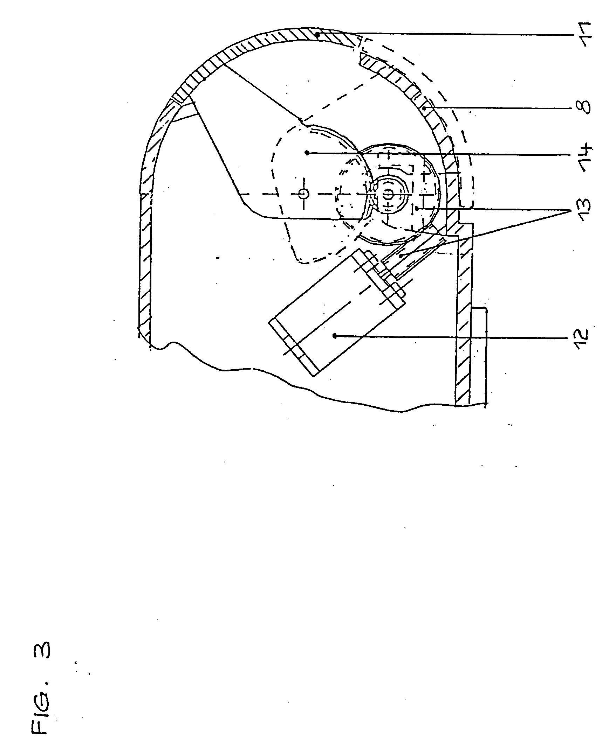

Die Figur 2 zeigt das Gehäuse 2 des Videorecorders 1 mit geschlossener Abdeckklappe 11. Die Abdeckklappe ist kreisbogenförmig gewölbt und verleiht dem Gerät ein neutrales, modernes Aussehen, sofern die Abdeckklappe geschlossen ist und somit die Bedienungs- und Anzeigeelemente überdeckt. Da die Abdeckklappe über die streifenförmige Abdeckung an der unteren Frontseite hinweg verschwenkbar ist, kann die Abdeckklappe in ihrer geöffneten Lage als ein zusätzliches Funktionsteil nicht erkannt werden. Die Abdeckklappe ist vorzugsweise aus farblich getöntem Kunststoff hergestellt, so daß ein beleuchtetes Anzeigefeld durch die geschlossene Abdeckung hindurch erkennbar bzw. ablesbar ist. Die Abdeckklappe 11 ist über einen dem Gehäuse zugeordneten Steuermotor 12 bewegbar. Der Steuermotor und somit die Abdeckklappe ist über eine am Gerät angeordnete Taste und/oder über einen Geräte-Fernbedienungsgeber zu betätigen. Die dem Gerät zugeordnete Taste kann als Annäherungstaste ausgeführt sein, so daß bei einer Bewegung der Hand eines Gerätbenutzers in Richtung auf das Gerät, sich die Abdeckklappe bereits vor dem Anfassen des Gerätes öffnet. Der Antrieb der Abdeckklappe über den Steuermotor ist durch ein dazwischengeschaltetes Getriebe und eine Rutschkupplung derart ausgebildet, daß die Abdeckklappe auch von Hand geöffnet werden kann.

Die Figur 3 zeigt in vergrößerter Darstellung einen Schnitt A-A durch die Frontseite des Gerätes, wobei nur ein Teilbereich der Frontseite zu erkennen ist und in etwas vereinfachter Darstellung den Antrieb der Abdeckklappe 11 zeigt. Die Abdeckklappe ist, wie in der Zeichnung gestrichelt dargestellt, über die Abdeckung 8 nach unten schwenkbar und ersetzt rein optisch im geöffneten Zustand den unteren Gehäusefrontteil des Gerätes. Der Steuermotor 12 treibt über ein Schneckengetriebe 13 ein Zahnsegment 14 an, das einstückig mit der Abdeckklappe 11 verbunden ist.

## Patentansprüche

1. Cassetten-Magnetbandgerät zur Bild-Ton-Aufzeichnung und Wiedergabe mit einem Gehäuse in rechteckiger flacher Bauform, wobei die Bedienungs- und Anzeigeelemente an der schmalen Frontseite des Gehäuses angeordnet und die Stirnflächen (7) beider Gehäuseseitenteile an der Gehäusefrontseite und eine nur im unteren Bereich der Frontseite über die ganze Breite des Gehäuses sich erstreckende streifenförmige Abdeckung (8) kreisbogenförmig nach außen gewölbt sind, und der Bereich der Bedien- und Anzeigeelemente durch eine kreisbogenförmig gewölbte Abdeckklappe (11) verschließbar ist,
dadurch gekennzeichnet, daß
- die Abdeckklappe (11) über einen dem Gerät zugeordneten Steuermotor (12) bewegbar ist,
- der Steuermotor über eine am Gerät angeordnete Taste und/oder über einen Geräte-Fernbedienungsgeber zu betätigen ist,
- der Antrieb der Abdeckklappe (11) über den Steuermotor (12) durch ein dazwischen geschaltetes Getriebe und eine Rutschkupplung derart ausgebildet ist, daß die Abdeckklappe (11) auch von Hand geöffnet werden kann.

2. Cassetten-Magnetbandgerät nach Anspruch 1, **dadurch gekennzeichnet**, daß die Abdeckklappe (11) über die streifenförmige Abdeckung (8) an der unteren Frontseite hinweg verschwenkbar ist.

3. Cassetten-Magnetbandgerät nach Anspruch 1 und 2, **dadurch gekennzeichnet,** daß die Abdeckklappe (11) aus farblich getöntem oder beschichtetem Kunststoff derart besteht, daß ein beleuchtetes Anzeigefeld durch die geschlossene Abdeckklappe hindurch erkennbar ist.

4. Kassetten-Magnetbandgerät nach einem der Ansprüche 1 bis 3, **dadurch gekennzeichnet,** daß die den Steuermotor betätigende Taste als Annäherungstaste ausgeführt ist, so daß bei einer Bewegung per Hand eines Gerätebenutzers in Richtung auf das Gerät sich die Abdeckklappe bereits vor dem Anfassen des Gerätes öffnet.

## Claims

1. Cassette magnetic-tape apparatus for picture/sound recording and reproduction having a housing of rectangular flat design, the operating and display elements being arranged on the narrow front side of the housing and the end faces (7) of the two housing side parts on the front side of the housing and a strip-shaped covering (8), which extends over the entire width of the housing only in the lower region of the front side, being curved outwards in the form of an arc of a circle, and the region of the operating and display elements being closable by a covering flap (11) curved in the form of an arc of a circle, characterized in that
- the covering flap (11) is movable by means of a control motor (12) assigned to the apparatus,
- the control motor can be actuated by means of a button arranged on the apparatus and/or by means of an apparatus remote-control transmitter,
- the drive of the covering flap (11) by means of the control motor (12) through a transmission connected in between and a slip clutch is designed in such a way that the covering flap (11) can also be opened manually.

2. Cassette magnetic-tape apparatus according to Claim 1, characterized in that the covering flap (11) is pivotable over the strip-shaped covering (8) on the lower front side.

3. Cassette magnetic-tape apparatus according to Claims 1 and 2, characterized in that the covering flap (11) consists of colour pigmented or coated plastic in such a way that an illuminated display panel can be seen through the closed covering flap.

4. Cassette magnetic-tape apparatus according to one of Claims 1 to 3, characterized in that the button actuating the control motor is designed as a proximity button, so that, if the user of the apparatus makes a movement with the hand in the direction of the apparatus, the covering flap already opens before the apparatus is touched.

## Revendications

1. Magnétoscope à cassette pour l'enregistrement et la reproduction d'images et du son comportant un boîtier de forme de réalisation rectangulaire plate, dans lequel les éléments de commande et d'affichage sont disposés sur la face avant étroite du boîtier, et les surfaces frontales (7) des deux parties latérales du boîtier situées au niveau de la face avant du boîtier et un capot en forme de bande (8), qui s'étend sur toute la largeur du boîtier uniquement dans la partie inférieure de la face avant, sont cintrés vers l'extérieur avec une forme en arc de cercle, et la zone des éléments de commande et d'affichage peut être fermée par un volet de recouvrement (11) cintré avec une forme en arc de cercle, caractérisé en ce que
- le volet de recouvrement (11) est déplaçable par l'intermédiaire d'un moteur de commande (12) associé à l'appareil,
- le moteur de commande doit être actionné par l'intermédiaire d'une touche disposée sur l'appareil et/ou par l'intermédiaire d'un émetteur de télécommande de l'appareil,
- l'entraînement du volet de recouvrement (11) est exécuté par l'intermédiaire du moteur de commande (12) au moyen d'une transmission intercalée et d'un accouplement patinant de sorte que le volet de recouvrement (11) peut être également ouvert manuellement.

2. Magnétoscope à cassette selon la revendication 1, caractérisé en ce qu'on peut faire basculer le volet de recouvrement (11) par-dessus le capot en forme de bande (8), au niveau de la face avant inférieure.

3. Magnétoscope à cassette selon les revendications 1 et 2, caractérisé en ce que le volet de recouvrement (11) est réalisé en une matière plastique colorée ou enduite de sorte qu'un panneau d'affichage éclairé est visible à travers le volet de recouvrement fermé.

4. Magnétoscope à cassette suivant l'une des revendications 1 à 3, caractérisé par le fait que la touche, qui actionne le moteur de commande, est réalisée sous la forme d'une touche sensitive de sorte que, lorsqu'un utilisateur de l'appareil avance sa main vers ce dernier, le volet de recouvrement s'ouvre déjà avant que l'appareil ne soit touché.
